# EUROPEAN PATENT SPECIFICATION

(11) **EP 3 933 315 B1**
(45) Date of publication and mention of the grant of the patent: **23.08.2023**
(21) Application number: 21182552.6
(22) Date of filing: 29.06.2021
(51) Int. Cl.: F25D 23/00, A47F 3/04, F16B 12/46

(54) **REFRIGERATED DISPLAY CASE AND METHOD OF MANUFACTURING THEREOF**
GEKÜHLTER SCHAUKASTEN UND VERFAHREN ZUR HERSTELLUNG DAVON
VITRINE RÉFRIGÉRÉE ET SON PROCÉDÉ DE FABRICATION

(30) Priority: 30.06.2020 US 202062705486 P
(43) Date of publication of application: 05.01.2022
(73) Proprietor: Carrier Corporation, Palm Beach Gardens, FL 33418 (US)
(72) Inventor: SCHUSTER, Markus, Mainz (DE); HAEHN, Thomas, Mainz (DE); VINZ, Sascha, Mainz (DE)
(74) Representative: Dehns

(56) References cited:
- EP-A1- 2 979 588
- US-A- 3 721 366
- US-A- 4 660 903
- US-A1- 2016 242 571

## Description

The invention relates to refrigerated display cases. More particularly, the invention relates to the corner assemblies used between two insulated glass panels of such refrigerated display cases.

Refrigerated display cases (commonly referred to as "freezers" or "cabinets") are used in a variety of commercial settings. One key use of such refrigerated display cases is for retail display and vending. For example, refrigerated display cases can be used as a product presentation platform (e.g., in a grocery store) for chilled products. These refrigerated display cases commonly include a bottom surface and plurality of insulated glass panels extending around the perimeter of the bottom surface. The insulated glass panels form corner assemblies with one another. Conventionally, the corner assemblies are held together using at least one spacer. These spacers hold the insulated glass panels a distance from one another and produce a seal between the insulated glass panels. However, these spacers traditionally are not transparent. Consequently, the use of spacers within refrigerated display cases is not ideal, as the spacers not only take away from the aesthetic appeal of the refrigerated display case, but also reduce the ability of the consumer to see the products within the refrigerated display case.

US 2016/242571 A1 relates to an insulated glass enclosure for a refrigerated display case.

US 4 660 903 A is directed to a temperature controlled display case with increased visibility of the merchandise on display.

Accordingly, there remains a need for a corner assembly for a refrigerated display case with increased transparency when compared to traditional corner assemblies.

According to a first aspect, the invention provides a refrigerated display case with a corner assembly, the corner assembly comprising: a first glass panel comprising an end region, an interior surface, and an exterior surface; a second glass panel comprising an end region, an interior surface, and an exterior surface; a sealing element disposed between the end region of the first glass panel and the end region of the second glass panel; a tape comprising an adhesive on an interior surface, the interior surface of the tape adhesively attached to the exterior surface of the first glass panel and the exterior surface of the second glass panel; and an external corner element comprising a first end, a second end, an interior surface, and an exterior surface, the interior surface of the external corner element disposed over at least a portion of an exterior surface of the tape wherein the end region of the first glass panel and the end region of the second glass panel each respectively comprise a stepped structure.

The first glass panel and the second glass panel may each respectively have a multi-layer insulated structure.

At least one of the first end and the second end of the external corner element may include an adhesive.

The sealing element may include an internal portion and a leg, the leg extending approximately perpendicular from the internal portion.

The leg may have a thickness less than half a thickness of the internal portion.

The leg may have a rigidity greater than a rigidity of the internal portion.

The internal portion may be disposed between the interior surface of the first glass panel and the interior surface of the second glass panel.

The leg may be disposed between the end region of the first glass panel and the end region of the second glass panel.

The stepped structure of the end region of the first glass panel may include a first portion and a second portion, the first portion having a width greater than a width of the second portion.

The stepped structure of the end region of the second glass panel may include a first portion and a second portion, the first portion having a width less than a width of the second portion.

At least one of the end region of the first glass panel and the end region of the second glass panel may include a heating element.

A heating element may be disposed in the first portion of the stepped structure of the end region of the first glass panel.

A heating element may be disposed between the first portion and the second portion of the stepped structure of the end region of the second glass panel.

According to a second aspect of the invention, a method of manufacturing at least a portion of a refrigerated display case is provided. The refrigerated display case includes a first glass panel and a second glass panel, each respectively including an end region, an interior surface, and an exterior surface. The method includes a step for positioning an end region of the first glass panel approximately adjacent to the end region of the second glass panel. The method includes a step for inserting a sealing element between the end region of the first glass panel and the end region of the second glass panel. The method includes adhesively attaching an interior surface of a tape to the exterior surface of the first glass panel and the exterior surface of the second glass panel and adhesively attaching an interior surface of an external corner element to at least a portion of an exterior surface of the tape, wherein the end region of the first glass panel and the end region of the second glass panel each respectively comprise a stepped structure.

The sealing element may include an internal portion and a leg, the leg extending approximately perpendicular from the internal portion.

The internal portion may be disposed between the interior surface of the first glass panel and the interior surface of the second glass panel, and the leg may be disposed between the end region of the first glass panel and the end region of the second glass panel.

The following descriptions of the drawings should not be considered limiting in any way. With reference to the accompanying drawings, like elements are numbered alike:
FIG. 1 is a perspective view of a refrigerated display case.
FIG. 2 is a perspective view of a corner assembly.
FIG. 3 is a cross-sectional top view of a corner assembly.
FIG. 4 is a flow diagram illustrating a method of manufacturing at least a portion of a refrigerated display case.

As will be described below, a corner assembly of a refrigerated display case, and a method of manufacturing at least a portion of a refrigerated display case are provided. The corner assembly is designed to have increased transparency when compared to traditional corner assemblies. For example, the corner assembly may have a reduced amount of spacing between the glass panels (e.g., when compared to traditional corner assemblies), which may maximize the amount of transparent area of the refrigerated display case. In addition to providing for increased transparency, the corner assembly is, at least majorly, externally structurally supported through use of a tape and external corner element, which enable a fairly simplistic method of manufacture.

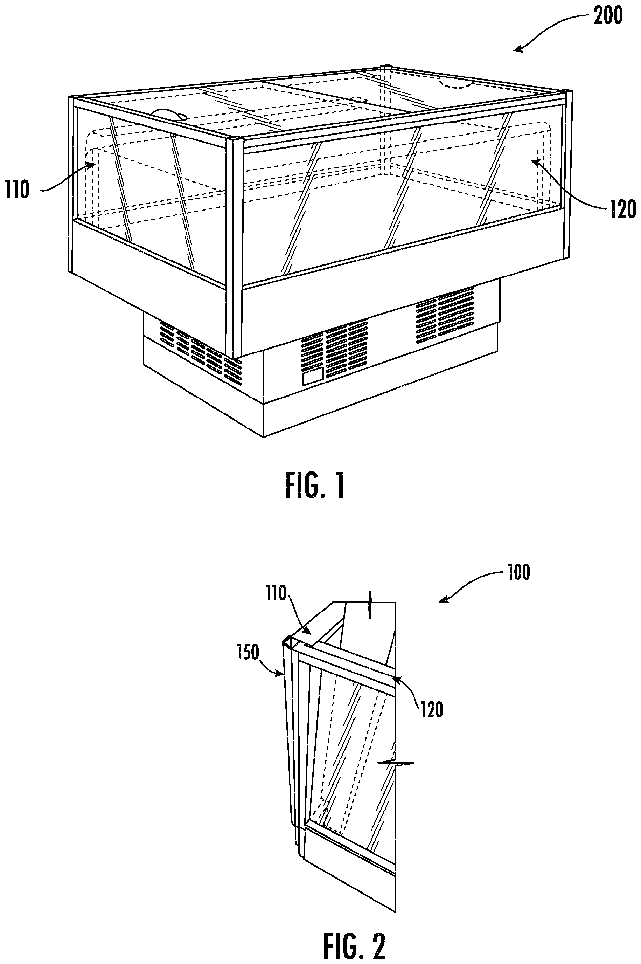

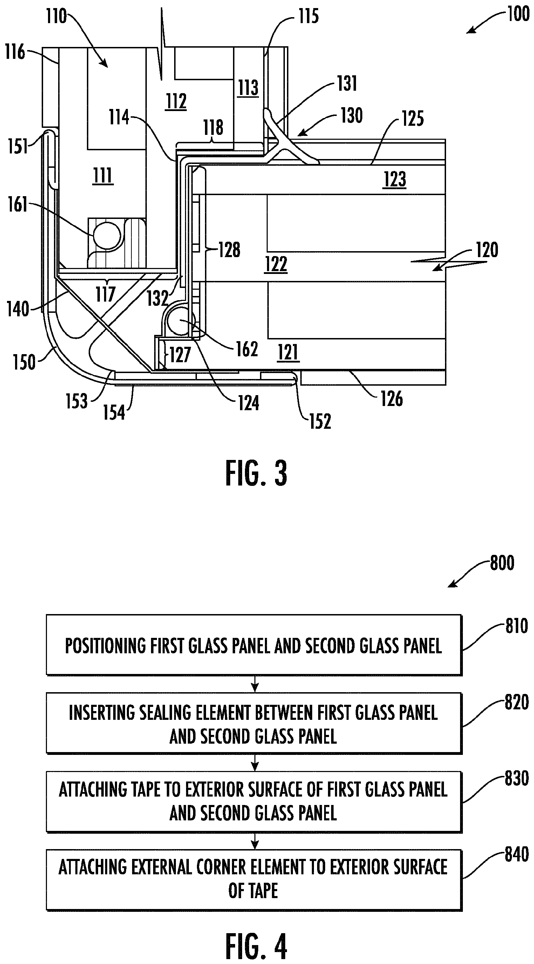

With reference now to the Figures, a perspective view of a refrigerated display case 100 is shown in FIG. 1. This refrigerated display case 100, in certain instances, may be referred to as a "display case", "freezer", and/or "cabinet". As shown in FIG. 1, the refrigerated display case 100 includes a first glass panel 110 and a second glass panel 120 connected together to form corner assemblies 100 (shown in FIGs. 2 and 3). It should be appreciated that a single refrigerated display case 100 may include multiple corner assemblies. As shown in FIG. 3, the corner assembly 100 includes a first glass panel 110, a second glass panel 120, a sealing element 130, and a tape 140. In the invention, the corner assembly 100 further includes an external corner element 150.

As depicted in FIG. 3, the first glass panel 110 includes an end region 114, an interior surface 115, and an exterior surface 116. The second glass panel 120 includes an end region 124, an interior surface 125, and an exterior surface 126. The sealing element 130 is disposed between the end region 114 of the fist glass panel 110 and the end region 124 of the second glass panel 120. The tape 140 includes an adhesive on an interior surface (not labeled, but to be viewed as the side of the tape 140 facing the exterior surface 116 of the first glass panel 110 and the exterior surface 126 of the second glass panel 120) to adhesively attach the interior surface of the tape 140 to the exterior surface 116 of the first glass panel 110 and the exterior surface 126 of the second glass panel 120. In certain instances, the tape 140 includes adhesive on only on the interior surface of the tape 140 and not on the exterior surface of the tape 140.

It should be appreciated that the first glass panel 110 and the second glass panel 120 each may respectively include a multi-layer insulated structure. A multi-layer insulated structure may be interpreted to mean that more than one pane of glass may be used to make up the structure. For example, the first glass panel 110 and the second glass panel 120 may each respectively include multiple (e.g., at least two or three) panes of glass that are joined to each other via an intermediate layer. As shown in FIG. 3, the multi-layer insulated structure of the first glass panel 110 may include three panes of glass 111, 112, 113, and the multi-layer insulated structure of the second glass panel 120 may include three panes of glass 121, 122, 123. The intermediate layer can be a thermoplastic material, such as polyvinyl butyral (PVB), ethylene vinyl acetate (EVA), polyurethane (PU), polyethylene terephthalate (PET), or multiple different layers thereof. In various embodiments, each pane of glass may be made of at least one of: flat glass, float glass, soda lime glass, quartz glass, or borosilicate glass. It should be appreciated that the thickness of each pane can vary. In certain instances, both the first glass panel 110 and the second glass panel 120 may have the same thickness (e.g., each may be approximately 28 mm thick).

As mentioned above, the corner assembly 100 may include an external corner element 150. The external corner element 150 may include a first end 151, a second end 152, an interior surface 153, and an exterior surface 154. The interior surface 153 of the external comer element 150 may be disposed over at least a portion of the exterior surface of the tape 140. In certain instances, at least one of the first end 151 and the second end 152 of the external corner element 150 include an adhesive (e.g., to adhesively attached the interior surface 153 of the external corner element 150 to the exterior surface of the tape 140). It is envisioned that the external corner element 150 may be composed of a metal (e.g., stainless steel or aluminum) and may be configured to cover at least a portion of the exterior surface of the tape 140. For example, the external corner element 150 may be a piece of metal flashing (e.g., being approximately between 0.5 mm and 2.5 mm thick). In certain instances, the external corner element 150 may be thicker at the first end 151 and the second end 152 (e.g., the metal may be doubled over, as shown in FIG. 3). It is envisioned that the tape 140 and the external corner element 150 may structurally support the corner assembly 100.

To seal the first glass panel 110 and the second glass panel 120 together the corner assembly 100 includes a sealing element 130. The sealing element 130 may include an internal portion 131 and a leg 132. The leg 132 may extend approximately perpendicular from the internal portion 131. The internal portion 131 may be disposed between the interior surface 115 of the first glass panel 110 and the interior surface 125 of the second glass panel 120, and the leg 131 may be disposed between the end region 114 of the first glass panel 110 and the end region 124 of the second glass panel 120. For example, the internal portion 130 may be configured to tightly abut both interior surfaces 115, 125, and the leg 131 may be configured to tightly abut both end regions 114, 124 to create a seal between the first glass panel 110 and the second glass panel 120. Tightly abut may be interpreted to mean that, when correctly installed, there may not be a space between the sealing element 130 and the end region 114 of the first glass panel 110 or between the sealing element 130 and the end region 124 of the second glass panel 120.

It is envisioned that the sealing element 130 may be composed of a polyvinyl chloride (PVC). PVC typically comes in two basic forms: rigid (sometimes abbreviated as RPVC) and flexible. To make the PVC more flexible (i.e., less rigid) plasticizers, such as phthalates, may be added. It is envisioned that the sealing element 130 may be designed to have the leg 132 more or less rigid than the internal portion 131. For example, the leg 132 may be more rigid than the internal portion 131 to make it easier to assemble (e.g., the stiff structure may allow the sealing element 130 to be more easily slid down between the end region 114 of the first glass panel 110 and the end region 124 of the second glass panel 120). In certain instances, the leg 132 may be made of one or more sections of foam tape, which may be less rigid than the internal portion 132, which may be made of a silicone in certain instances. It should be appreciated that in certain instances the internal portion 131 may be more rigid than the leg 132. Although described herein that the sealing element 130 may be one continuous member in certain instances, it should be appreciated that in certain instances the sealing element 130 may be made of multiple, independent members adjacently configured to seal the end region 114 of the first glass panel 110 and the send region 124 of the second glass panel 120.

In certain instances, the sealing element 130 is designed with minimal thickness. For example, the leg 132 portion of the sealing element 130 may have a thickness less than half a thickness of the internal portion 131. In certain instances, the leg 132 portion sealing element 130 is about 1 mm thick (e.g., between 0.5 and 4 mm) and the internal portion 131 is about 2 mm thick (e.g., between 1 and 8 mm). This thickness of the sealing element 130, in combination with the way in which the first glass panel 110 and the second glass panel 120 align may make it possible to minimize the cross-sectional area of the corner assembly 100, which may enable more of the refrigerated display case 200 to be transparent.

It is envisioned that the end region 114 of the first glass panel 110 and the end region 124 of the second glass panel 120 each have respectively a stepped structure. A stepped structure may be interpreted to mean that the end region 114, 124 may include multiple portions of differing widths. As shown in FIG. 3, the stepped structure of the end region 114 of the first glass panel 110 may include a first portion 117 and a second portion 118. In certain instances, the first portion 117 may have a width greater than a width of the second portion 118 (e.g., the first portion 117 having a width of approximately 18 mm and the second portion 118 having a width of approximately 10 mm). The stepped structure of the end region 124 of the second glass panel 120 may also include a first portion 127 and a second portion 128. In certain instances, the first portion 127 has a width less than a width of the second portion 128. As shown the stepped structure of the end regions 114, 124 may be complimentary to one another so as to form an approximately right angle at the intersection of the interior surfaces 115, 125 and the sealing element 130. It should be appreciated that the leg 132 of the sealing element 130 may have a complimentary stepped structure (e.g., similar to the stepped structure of the end regions 114, 124) so as to be able to be tightly abut the end regions 114, 124.

To prevent frost buildup along the corner assembly 100, the corner assembly 100 may include one or more heating element 161, 162. For example, at least one of the end region 114 of the first glass panel 110 and the end region 124 of the second glass panel 120 may include a heating element 161, 162. As shown in FIG. 3, this heating element 161, 162 may be configured as a tube (e.g., extending along at least a portion of the length of the corner assembly 100). This heating element 161, 162 may be an electrically powered tubular heating element. In certain instances, the corner assembly 100 includes a heating element 161 disposed in the first portion 117 of the stepped structure of the end region 114 of the first glass panel 110. In certain instances, the corner assembly 100 includes a heating element 162 disposed between the first portion 127 and the second portion 128 of the stepped structure of the end region of the second glass panel 120. It should be appreciated that although depicted herein to include a heating element 161, 162 disposed on each end region 114, 124, in certain instances, only one heating element 161, 162 (or no heating element) may be incorporated.

The design and configuration of the corner assembly 100 make it possible to maximize the transparent area of a refrigerated display case 200, which may make the refrigerated display case 200 more aesthetically appealing and better suited to display chilled products (by minimizing the blocking of the goods). This design and configuration may also enable a fairly simplistic method of manufacture (e.g., by reducing the number of structural components needed on the interior of the refrigerated display case 200). As mentioned above, the corner assembly 100 is externally structurally supported through use of a tape 140 and external corner element 150, and has minimal internal components (e.g., only the internal portion 131 of the sealing element 130 is on the interior surface 115, 125 of the glass panels 110, 120).

The method of manufacturing at least a portion of a refrigerated display case 200 is shown in FIG. 4. This method may be done, for example, using exemplary corner assembly 100, as shown in FIGs. 2 and 3. As described above, the refrigerated display case 200 includes at least a first glass panel 110 and a second glass panel 120, each respectively including an end region 114, 124, an interior surface 115, 125, and an exterior surface 116, 126. The method 800 provides step 810 for positioning the end region 114 of the first glass panel 110 approximately adjacent to the end region 124 of the second glass panel 120. To position the first glass panel 110 and the second glass panel 120 a support (e.g., a brace) may be used. The method 800 provides step 820 for inserting a sealing element 130 between the end region 114 of the first glass panel 110 and the end region 124 of the second glass panel 120. For example, the sealing element 130 may be slid from the top down between the first glass panel 110 and the second glass panel 120. The method 800 provides step 830 for adhesively attaching an interior surface of a tape 140 to the exterior surface 116 of the first glass panel 110 and the exterior surface 126 of the second glass panel 120. For example, a single strip of tape 140 may be applied to the exterior surfaces 116, 126 so as to span the gap between the exterior surfaces 116, 126. It should be appreciated that a single piece of tape 140 may be used to span the entire length of the corner assembly 100. The method 800 provides step 840 for adhesively attaching an interior surface 153 of an external corner element 150 to at least a portion of an exterior surface of the tape 140.

## Claims

1. A refrigerated display case (200) with a corner assembly (100), the corner assembly (100) comprising:
a first glass panel (110) comprising an end region (114), an interior surface (115), and an exterior surface (116);
a second glass panel (120) comprising an end region (124), an interior surface (125), and an exterior surface (126);
a sealing element (130) disposed between the end region (114) of the first glass panel and the end region (124) of the second glass panel; wherein the end region (114) of the first glass panel (110) and the end region (124) of the second glass panel (120) each respectively comprise a stepped structure;
**characterized by**
a tape (140) comprising an adhesive on an interior surface, the interior surface of the tape adhesively attached to the exterior surface (116) of the first glass panel (110) and the exterior surface (126) of the second glass panel (120); and
an external corner element (150) comprising a first end (151), a second end (152), an interior surface (153), and an exterior surface (154), the interior surface (153) of the external corner element disposed over at least a portion of an exterior surface of the tape (140).

2. The refrigerated display case (200) of claim 1, wherein the first glass panel (110) and the second glass panel (120) each respectively comprise a multi-layer insulated structure.

3. The refrigerated display case (200) of claim 1 or 2, wherein at least one of the first end (151) and the second end (152) of the external corner element (150) comprise an adhesive.

4. The refrigerated display case (200) of any preceding claim, wherein the sealing element (130) comprises an internal portion (131) and a leg (132), the leg extending approximately perpendicular from the internal portion, optionally:
wherein the leg (132) comprises a thickness less than half a thickness of the internal portion (131), and/or:
wherein the leg (132) comprises a rigidity greater than a rigidity of the internal portion (131).

5. The refrigerated display case of claim 4, wherein the internal portion (131) is disposed between the interior surface (114) of the first glass panel and the interior surface (124) of the second glass panel, and/or:
wherein the leg (132) is disposed between the end region (114) of the first glass panel and the end region (124) of the second glass panel.

6. The refrigerated display case (200) of any preceding claim, wherein the stepped structure of the end region (114) of the first glass panel comprises a first portion (117) and a second portion (118), the first portion comprising a width greater than a width of the second portion, and/or:
wherein the stepped structure of the end region (124) of the second glass panel comprises a first portion (127) and a second portion (128), the first portion comprising a width less than a width of the second portion.

7. The refrigerated display case (200) of any preceding claim, wherein at least one of the end region (114) of the first glass panel (110) and the end region (124) of the second glass panel (120) comprise a heating element (161, 162).

8. The refrigerated display case (200) of any preceding claim, wherein a heating element (161) is disposed in the first portion (117) of the stepped structure of the end region (114) of the first glass panel (110).

9. The refrigerated display case (200) of any preceding claim, wherein a heating element (162) is disposed between the first portion (127) and the second portion (128) of the stepped structure of the end region (124) of the second glass panel (120).

10. A method of manufacturing at least a portion of a refrigerated display case (200), the refrigerated display case comprising a first glass panel (110) and a second glass panel (120), each respectively comprising an end region (114, 124), an interior surface (115, 125), and an exterior surface (116, 126), the method comprising:
positioning the end region (114) of the first glass panel (110) approximately adjacent to the end region (124) of the second glass panel (120);
inserting a sealing element (130) between the end region (114) of the first glass panel and the end region (124) of the second glass panel;
adhesively attaching an interior surface of a tape (140) to the exterior surface (116) of the first glass panel and the exterior surface (126) of the second glass panel; and
adhesively attaching an interior surface (153) of an external corner element (150) to at least a portion of an exterior surface of the tape (140),
wherein the end region (114) of the first glass panel and the end region (124) of the second glass panel each respectively comprise a stepped structure.

11. The method of claim 10, wherein the sealing element (130) comprises an internal portion (131) and a leg (132), the leg extending approximately perpendicular from the internal portion.

12. The method of claim 11, wherein the internal portion (131) is disposed between the interior surface (115) of the first glass panel and the interior surface (125) of the second glass panel, and the leg (132) is disposed between the end region (114) of the first glass panel and the end region (124) of the second glass panel.

## Patentansprüche

1. Gekühlter Schaukasten (200) mit einer Eckbaugruppe (100), wobei die Eckbaugruppe (100) Folgendes umfasst:
eine erste Glasscheibe (110), die einen Endbereich (114), eine Innenfläche (115) und eine Außenfläche (116) umfasst;
eine zweite Glasscheibe (120), die einen Endbereich (124), eine Innenfläche (125) und eine Außenfläche (126) umfasst;
ein Dichtungselement (130), das zwischen dem Endbereich (114) der ersten Glasscheibe und dem Endbereich (124) der zweiten Glasscheibe angeordnet ist; wobei der Endbereich (114) der ersten Glasscheibe (110) und der Endbereich (124) der zweiten Glasscheibe (120) jeweils eine abgestufte Struktur umfassen;
**gekennzeichnet durch**
ein Band (140), das einen Klebstoff auf einer Innenfläche umfasst, wobei die Innenfläche des Bands klebend an der Außenfläche (116) der ersten Glasscheibe (110) und der Außenfläche (126) der zweiten Glasscheibe (120) angebracht ist; und
ein Außeneckelement (150), das ein erstes Ende (151), ein zweites Ende (152), eine Innenfläche (153) und eine Außenfläche (154) umfasst, wobei die Innenfläche (153) des Außeneckelements über mindestens einem Abschnitt einer Außenfläche des Bandes (140) angeordnet ist.

2. Gekühlter Schaukasten (200) nach Anspruch 1, wobei die erste Glasscheibe (110) und die zweite Glasscheibe (120) jeweils eine mehrschichtige Isolierstruktur umfassen.

3. Gekühlter Schaukasten (200) nach Anspruch 1 oder 2, wobei mindestens eines von dem ersten Ende (151) und dem zweiten Ende (152) des Außeneckelements (150) einen Klebstoff umfasst.

4. Gekühlter Schaukasten (200) nach einem der vorhergehenden Ansprüche, wobei das Dichtungselement (130) einen Innenabschnitt (131) und einen Schenkel (132) umfasst, wobei sich der Schenkel ungefähr senkrecht von dem Innenabschnitt erstreckt, optional: wobei der Schenkel (132) eine Dicke von weniger als der halben Dicke des Innenabschnitts (131) umfasst, und/oder:
wobei der Schenkel (132) eine Steifigkeit umfasst, die größer als eine Steifigkeit des Innenabschnitts (131) ist.

5. Gekühlter Schaukasten nach Anspruch 4, wobei der Innenabschnitt (131) zwischen der Innenfläche (114) der ersten Glasscheibe und der Innenfläche (124) der zweiten Glasscheibe angeordnet ist, und/oder:
wobei der Schenkel (132) zwischen dem Endbereich (114) der ersten Glasscheibe und dem Endbereich (124) der zweiten Glasscheibe angeordnet ist.

6. Gekühlter Schaukasten (200) nach einem der vorhergehenden Ansprüche, wobei die abgestufte Struktur des Endbereichs (114) der ersten Glasscheibe einen ersten Abschnitt (117) und einen zweiten Abschnitt (118) umfasst, wobei der erste Abschnitt eine Breite umfasst, die größer ist als eine Breite des zweiten Abschnitts, und/oder:
wobei die abgestufte Struktur des Endbereichs (124) der zweiten Glasscheibe einen ersten Abschnitt (127) und einen zweiten Abschnitt (128) umfasst, wobei der erste Abschnitt eine Breite umfasst, die geringer ist als eine Breite des zweiten Abschnitts.

7. Gekühlter Schaukasten (200) nach einem der vorhergehenden Ansprüche, wobei mindestens einer von dem Endbereich (114) der ersten Glasscheibe (110) und dem Endbereich (124) der zweiten Glasscheibe (120) ein Heizelement (161, 162) umfasst.

8. Gekühlter Schaukasten (200) nach einem der vorhergehenden Ansprüche, wobei ein Heizelement (161) in dem ersten Abschnitt (117) der abgestuften Struktur des Endbereichs (114) der ersten Glasscheibe (110) angeordnet ist.

9. Gekühlter Schaukasten (200) nach einem der vorhergehenden Ansprüche, wobei ein Heizelement (162) zwischen dem ersten Abschnitt (127) und dem zweiten Abschnitt (128) der abgestuften Struktur des Endbereichs (124) der zweiten Glasscheibe (120) angeordnet ist.

10. Verfahren zum Herstellen mindestens eines Abschnitts eines gekühlten Schaukastens (200), wobei der gekühlte Schaukasten eine erste Glasscheibe (110) und eine zweite Glasscheibe (120) umfasst, die jeweils einen Endbereich (114, 124), eine Innenfläche (115, 125) und eine Außenfläche (116, 126) umfassen, wobei das Verfahren Folgendes umfasst:
Positionieren des Endbereichs (114) der ersten Glasscheibe (110) ungefähr neben dem Endbereich (124) der zweiten Glasscheibe (120) ;
Einfügen eines Dichtungselements (130) zwischen dem Endbereich (114) der ersten Glasscheibe und dem Endbereich (124) der zweiten Glasscheibe;
klebendes Anbringen einer Innenfläche eines Bandes (140) an der Außenfläche (116) der ersten Glasscheibe und der Außenfläche (126) der zweiten Glasscheibe; und
klebendes Anbringen einer Innenfläche (153) eines Außeneckelements (150) an mindestens einem Abschnitt einer Außenfläche des Bands (140),
wobei der Endbereich (114) der ersten Glasscheibe und der Endbereich (124) der zweiten Glasscheibe jeweils eine abgestufte Struktur umfassen.

11. Verfahren nach Anspruch 10, wobei das Dichtungselement (130) einen Innenabschnitt (131) und einen Schenkel (132) umfasst, wobei sich der Schenkel ungefähr senkrecht von dem Innenabschnitt erstreckt.

12. Verfahren nach Anspruch 11, wobei der Innenabschnitt (131) zwischen der Innenfläche (115) der ersten Glasscheibe und der Innenfläche (125) der zweiten Glasscheibe angeordnet ist, und der Schenkel (132) zwischen dem Endbereich (114) der ersten Glasscheibe und dem Endbereich (124) der zweiten Glasscheibe angeordnet ist.

## Revendications

1. Vitrine réfrigérée (200) avec un ensemble d'angle (100), l'ensemble d'angle (100) comprenant :
un premier panneau de verre (110) comprenant une région d'extrémité (114), une surface intérieure (115) et une surface extérieure (116) ;
un second panneau de verre (120) comprenant une région d'extrémité (124), une surface intérieure (125) et une surface extérieure (126) ;
un élément d'étanchéité (130) disposé entre la région d'extrémité (114) du premier panneau de verre et la région d'extrémité (124) du second panneau de verre ; dans laquelle la région d'extrémité (114) du premier panneau de verre (110) et la région d'extrémité (124) du second panneau de verre (120) comprennent chacune respectivement une structure étagée ;
**caractérisée par**
un ruban (140) comprenant un adhésif sur une surface intérieure, la surface intérieure du ruban étant fixée de façon adhésive à la surface extérieure (116) du premier panneau de verre (110) et la surface extérieure (126) du second panneau de verre (120) ; et
un élément d'angle externe (150) comprenant une première extrémité (151), une seconde extrémité (152), une surface intérieure (153) et une surface extérieure (154), la surface intérieure (153) de l'élément d'angle externe étant disposée sur au moins une partie d'une surface extérieure du ruban (140).

2. Vitrine réfrigérée (200) selon la revendication 1, dans laquelle le premier panneau de verre (110) et le second panneau de verre (120) comprennent chacun respectivement une structure isolante multicouche.

3. Vitrine réfrigérée (200) selon la revendication 1 ou 2, dans laquelle au moins l'une parmi la première extrémité (151) et la seconde extrémité (152) de l'élément d'angle externe (150) comprend un adhésif.

4. Vitrine réfrigérée (200) selon une quelconque revendication précédente, dans laquelle l'élément d'étanchéité (130) comprend une partie interne (131) et une patte (132), la patte s'étendant approximativement perpendiculairement à la partie interne, éventuellement :
dans laquelle la patte (132) comprend une épaisseur inférieure à la moitié d'une épaisseur de la partie interne (131), et/ou : dans laquelle la patte (132) comprend une rigidité supérieure à une rigidité de la partie interne (131).

5. Vitrine réfrigérée selon la revendication 4, dans laquelle la partie interne (131) est disposée entre la surface intérieure (114) du premier panneau de verre et la surface intérieure (124) du second panneau de verre, et/ou :
dans laquelle la patte (132) est disposée entre la région d'extrémité (114) du premier panneau de verre et la région d'extrémité (124) du second panneau de verre.

6. Vitrine réfrigérée (200) selon une quelconque revendication précédente, dans laquelle la structure étagée de la région d'extrémité (114) du premier panneau de verre comprend une première partie (117) et une seconde partie (118), la première partie comprenant une largeur supérieure à une largeur de la seconde partie, et/ou :
dans laquelle la structure étagée de la région d'extrémité (124) du second panneau de verre comprend une première partie (127) et une seconde partie (128), la première partie comprenant une largeur inférieure à une largeur de la seconde partie.

7. Vitrine réfrigérée (200) selon une quelconque revendication précédente, dans laquelle au moins l'une parmi la région d'extrémité (114) du premier panneau de verre (110) et la région d'extrémité (124) du second panneau de verre (120) comprend un élément chauffant (161, 162).

8. Vitrine réfrigérée (200) selon une quelconque revendication précédente, dans laquelle un élément chauffant (161) est disposé dans la première partie (117) de la structure étagée de la région d'extrémité (114) du premier panneau de verre (110).

9. Vitrine réfrigérée (200) selon une quelconque revendication précédente, dans laquelle un élément chauffant (162) est disposé entre la première partie (127) et la seconde partie (128) de la structure étagée de la région d'extrémité (124) du second panneau de verre (120).

10. Procédé de fabrication d'au moins une partie d'une vitrine réfrigérée (200), la vitrine réfrigérée comprenant un premier panneau de verre (110) et un second panneau de verre (120), chacun comprenant respectivement une région d'extrémité (114, 124), une surface intérieure (115, 125) et une surface extérieure (116, 126), le procédé comprenant :
le positionnement de la région d'extrémité (114) du premier panneau de verre (110) approximativement adjacente à la région d'extrémité (124) du second panneau de verre (120) ;
l'insertion d'un élément d'étanchéité (130) entre la région d'extrémité (114) du premier panneau de verre et la région d'extrémité (124) du second panneau de verre ;
la fixation de façon adhésive d'une surface intérieure d'un ruban (140) à la surface extérieure (116) du premier panneau de verre et à la surface extérieure (126) du second panneau de verre ; et
la fixation de façon adhésive d'une surface intérieure (153) d'un élément d'angle externe (150) à au moins une partie d'une surface extérieure du ruban (140),
dans lequel la région d'extrémité (114) du premier panneau de verre et la région d'extrémité (124) du second panneau de verre comprennent chacune respectivement une structure étagée.

11. Procédé selon la revendication 10, dans lequel l'élément d'étanchéité (130) comprend une partie interne (131) et une patte (132), la patte s'étendant approximativement perpendiculairement à la partie interne.

12. Procédé selon la revendication 11, dans lequel la partie interne (131) est disposée entre la surface intérieure (115) du premier panneau de verre et la surface intérieure (125) du second panneau de verre, et la patte (132) est disposée entre la région d'extrémité (114) du premier panneau de verre et la région d'extrémité (124) du second panneau de verre.
